(19) Europäisches Patentamt
European Patent Office
Office européen des brevets

(11) **EP 4 414 906 A1**

(12) **EUROPEAN PATENT APPLICATION**

(43) Date of publication:
**14.08.2024 Bulletin 2024/33**

(21) Application number: **23156359.4**

(22) Date of filing: **13.02.2023**

(51) International Patent Classification (IPC):
**G06Q 10/04** (2023.01)    **C25B 1/04** (2021.01)

(52) Cooperative Patent Classification (CPC):
**G06Q 10/04; C25B 1/04; C25B 15/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **GUTERMUTH, Georg**
**69115 Heidelberg (DE)**

• **LENDERS, Felix**
**64293 Darmstadt (DE)**
• **BISKOPING, Matthias**
**69493 Hirschberg (DE)**
• **PRIMAS, Bernhard**
**68165 Mannheim (DE)**
• **FOKKEN, Eike**
**69214 Eppelheim (DE)**
• **STARK, Katharina**
**69469 Weinheim (DE)**

(74) Representative: **Maiwald GmbH**
**Engineering**
**Elisenhof**
**Elisenstrasse 3**
**80335 München (DE)**

(54) **METHOD FOR CONTROLLING OPERATION OF AN ELECTROLYZER PLANT**

(57)    The invention provides a computer-implemented method for controlling operation of an electrolyzer plant comprising one or more electrolyzer modules, each comprising at least one electrolyzer stack, the method comprising: determining, for each of the one or more electrolyzer modules, a target module setpoint by minimizing a total operational cost function associated with the operation of the electrolyzer plant, wherein the total operational cost function comprises overall degradation cost associated with the degradation of the one or more electrolyzer modules; and controlling each of the one or more electrolyzer modules to operate at the determined target module setpoint

Fig. 1b

EP 4 414 906 A1

**Description**

FIELD OF THE INVENTION

The invention pertains to a computer-implemented method for controlling operation of an electrolyzer plant, a system, a computer program product, and a computer-readable medium.

BACKGROUND

Electrolyzer plants comprise one or more electrolyzer modules, each in turn comprising at least one electrolyzer stack. Each stack may consist of a plurality of cells.

Improving operation of an electrolyzer plant, particularly operating it at a suitable overall operational setpoint, allows for reducing costs incurred by operating the plant.

Some simple examples for reducing costs include making use of storage for electricity or hydrogen in such a manner as to be able to operate the modules when electricity prices are low. As another example, on a module level, module setpoints may be selected so as to be in power setpoint ranges where the modules operate efficiently.

However, there is a need to make further improvements to control operation of the electrolyzer plants that allow for reducing costs.

Thus, it is an object of the present invention to provide a method for controlling operation of an electrolyzer plant that allows for further reducing costs.

SUMMARY

The object is achieved by the present invention. The invention provides a method, system, computer program product, and computer-readable medium according to the independent claims. Preferred embodiments are laid down in the dependent claims.

The invention provides a computer-implemented method for controlling operation of an electrolyzer plant comprising one or more electrolyzer modules, each comprising at least one electrolyzer stack. The method comprises determining, for each of the one or more electrolyzer modules, a target module setpoint by minimizing a total operational cost function associated with the operation of the electrolyzer plant, wherein the total operational cost function comprises overall degradation cost associated with the degradation of the one or more electrolyzer modules. The method further comprises controlling each of the one or more electrolyzer modules to operate at the determined target module setpoint.

Thus, using the method of the present disclosure, in addition to costs associated with the operation as such, the method also takes into account costs associated with degradation of the electrolyzer modules. For example, operation at module setpoints may seem to have low costs based on efficiency, pricing of power and hydrogen, or the like, yet may cause undesirable degradation characteristics of the modules, e.g., rapid degradation or unevenly distributed degradation or degradation that causes irregularities in the maintenance schedule.

The method of the present disclosure proposes using a total operation cost function that expresses the total operation cost including degradation cost and minimizing said total cost function. Thus, costs can be reduced compared to known methods. Accordingly, the method of the present disclosure achieves at least the above-identified object.

The electrolyzer plant may comprise a plurality of electrolyzer modules. Each of the electrolyzer modules may comprise a plurality of stacks. Each stack may comprise a plurality of cells.

An electrolyzer module may comprise, in addition to one or more stacks, other components, e.g., separator tanks, cooling units, pumps, a rectifier and/or a filter.

In the present disclosure, a setpoint may be a value that is representative of the power at which an electrolyzer module is operated at a given point in time. This is also referred to as power setpoint of the electrolyzer module. A (module) setpoint may, for example, be expressed as a power value, a current value, or a voltage value. The module setpoint, as an example, may determine the current running through the stacks of the module.

The term "target module setpoint" may be understood broadly and may, for example, refer to an operational parameter to be set for the operation of the electrolyzer module.

Operating an electrolyzer module at the determined target setpoint may comprise setting the target setpoint as a control parameter for the operation of the electrolyzer module.

A (power) setpoint of an electrolyzer plant may be the sum of the (power) setpoints of all electrolyzer modules of the plant. All modules may operate at the same setpoint or the setpoints of different modules may be different.

An electrolyzer module operation may also be described by a hydrogen setpoint, which is the hydrogen output by an electrolyzer module. Similarly, the electrolyzer plant may have an overall plant hydrogen setpoint. The overall plant hydrogen setpoint may equal the sum of the module hydrogen setpoints or may differ from said sum, e.g., when hydrogen is fed into or taken from hydrogen storage.

The total operational cost function, according to the present disclosure, may be a function that represents overall operational cost as a function of the module setpoints plus additional aspects by plant-wide functionality, the so-called BoP (Balance of Plant includes among others water cleaning, hydrogen drying, compression and storage, electrical distribution, and plant automation.

The total operational costs (as will be described in more detail below) may, in addition to overall degradation cost associated with the degradation of the one or more electrolyzer modules, comprise other costs associated with operation of the electrolyzer plant, for example energy cost, energy storage cost, cost associated with the hydrogen price, hydrogen storage cost, cost associated with energy storage degradation and losses, cost associated with hydrogen storage degradation and losses, or the like.

The overall (module) degradation cost and said other costs may each be seen as a term of the total operational cost function.

The overall degradation cost associated the degradation of the one or more electrolyzer modules may comprise any cost arising due to degradation of an electrolyzer, for example, cost associated with degradation being above or below an ideal degradation rate, maintenance costs, module exchange costs, or the like. The overall degradation cost may be a sum, optionally a weighted sum, of the respective module degradation cost of each of the modules.

The module degradation cost and how it may be determined will be described in more detail below. The module degradation cost may be provided as a function of module setpoint, i.e., module degradation cost may depend on the setpoint at which an electrolyzer module is operated.

The method of the present disclosure may comprise the step of determining the total operational cost function. Determining the total operational cost function may comprise determining, for each of the one or more electrolyzer modules, a module degradation cost resulting from operation of the electrolyzer module as a function of module setpoint and/or module setpoint variations. Determining the total operational cost function may further comprise, based on the determined module degradation cost, determining the overall degradation cost.

Thus, a predictive component is introduced in the total operational cost function that allows for projecting future costs due to module degradation.

According to the present disclosure, the module degradation cost may be calculated based on at least one of the following: cycle cost, in particular based on a number of on/off cycles for the electrolyzer module, ramping cost, in particular based on a cumulative amount of module setpoint ramping for the electrolyzer module, degradation cost due to current, in particular based on cumulative current or current density for the electrolyzer module, operating temperature, in particular, a scaling factor derived from the operating temperature, for example, described by Arrhenius law.

The term cycle cost is to be understood broadly and may refer to cost brought about by switching on and off an electrolyzer module. Each switching cycle (or on/off cycle) leads to dissolving and passivation of electrolyzer electrodes. The cycle cost depends on a number of on/off cycles for the electrolyzer module, for example increase linearly with the number of on/off cycles. Thus, as an example, in order to reduce a degradation rate, it may be advantageous to keep the electrolyzer module in an on-state (i.e. at a module setpoint that is not zero) or at least hot standby.

The term ramping cost is to be understood broadly and may refer to cost associated with changing the module setpoint in operation, i.e., setpoint ramping. Ramping may, for example, affect the separator and the catalyst of an electrolyzer module. The ramping cost may be based on a cumulative amount of module setpoint ramping for the electrolyzer module, e.g., a time integrated module setpoint ramping.

The term "degradation cost due to current" is to be understood broadly and may refer to cost associated with degradation due to currents during operation, particularly due to high currents, which degrade modules faster than lower currents. The degradation cost due to current may be based on cumulative current or current density for the electrolyzer module, e.g., a time integrated current or current density.

The term operating temperature is to be understood broadly and may refer to a temperature of a module during operation. Higher temperature may increase the speed of chemical reactions, including degradation reactions. This particularly concerns operation temperatures above a nominal operation temperature, e.g., provided by a manufacturer. The module degradation cost may, for example, be calculated by using a scaling factor derived from the operating temperature, for example, described by Arrhenius law.

The module degradation cost may be based on at least one of the following parameters, one or more of which may be time dependent, associated with the at least one stack of the electrolyzer module: activation energy $E$ of degradation reaction, nominal temperature of the stack $T^{nom}$, nominal stack lifetime $T^{lifetime}$ maximum stack current $I_{max}$, cost for stack maintenance $M^{maintenance}$ at end-of-life, nominal number $n^{lifecycle}$ of on/off cycles before stack maintenance, ramping factor $r$, which relates ramping from minimum to maximum module setpoint to one on/off cycle.

The activation energy $E$ of the degradation reaction may, for example, be determined empirically or semi-empirically or modelled.

The nominal temperature of the stack $T^{nom}$ refers to a temperature of the stack during nominal operation. It may, for example, be provided by the stack supplier.

The nominal stack lifetime $T^{lifetime}$, may refer to a stack lifetime under nominal operation, e.g., in terms of full load hours, and may be provided by a stack supplier.

The maximum stack current $I_{max}$ may refer to the maximum current at which the module is operated.

The cost for stack maintenance $M^{maintenance}$ at end-of-life may be the cost for module maintenance by cell replacement and may be provided by a stack supplier.

The nominal number $n^{lifecycle}$ of on/off cycles before stack maintenance may be a value provided by the supplier.

The ramping factor $r$, which relates ramping from minimum to maximum module setpoint to one on/off cycle may, for example, be determined empirically, semi-empirically or modelled.

At least some of the above parameters may be time dependent. In particular, the parameters, particularly the ramping factor $r$, may change over the course of the stack lifetime. Accordingly, maintenance costs may also change over time.

The method of the present disclosure may comprise determining the cycle cost based on the number of on/off cycles and the cycle cost for a single cycle, particularly determining the cycle cost by multiplying the number of on/off cycles and the cost of stack maintenance at end-of-life $M^{maintenance}$ divided by the nominal number $n^{lifecycle}$ of on/off cycles before maintenance. Reducing the number of cycles may decrease a degradation rate, for example.

The method of the present disclosure may comprise determining the ramping cost for operation at a non-constant module setpoint based on cumulative ramping and based on degradation behavior of the electrolyzer module, particularly separator and/or catalyst of the electrolyzer module, depending on the non-constant module setpoint. Reducing the cumulative (integrated over time) ramping of the module setpoint may decrease a degradation rate of the electrolyzer module. The non-constant module setpoint, may, for example, be expressed by $P(t)$, $U(t)$, or $I(t)$.

According to the present disclosure, the ramping cost, particularly the degradation behavior, may in particular be determined based on a/the ramping factor $r$ which relates ramping from minimum to maximum module setpoint to one on/off cycle, a ratio of the cumulative ramping and the maximum module setpoint, and cycle cost for a single cycle. The cost for a single cycle may be the cost of stack maintenance at end-of-life $M^{maintenance}$ divided by the nominal number $n^{lifecycle}$ of on/off cycles before maintenance.

The method of the present disclosure may comprise determining the degradation cost due to current based on a cumulative current density in the cell membrane, in particular simulated by a model or derived from the module setpoint, or based on an integrated module setpoint. In particular, the degradation cost due to current may be determined based on the integrated module setpoint, cost for stack maintenance at end-of-life $M^{maintenance}$, a/the nominal stack lifetime, and maximum module setpoint. Reducing the cumulative current may decrease a degradation rate, for example.

The method of the present disclosure may comprise determining the total operational cost function and determining the total operational cost function may comprise at least one of: determining degradation parameters based on stack attributes such as stack type and/or stack supplier, determining degradation costs of energy storages associated with use of hydrogen storage and/or batteries as energy storage as part of the operation of the electrolyzer plant, determining costs associated with a degree of maintenance schedule compliance. Alternatively or in addition, determining the target module setpoints may be carried out with maintenance schedule compliance as constraints.

It is noted, as will be discussed in detail below, that degradation at a certain rate also impacts factors other than, e.g., production efficiency and/or replacement costs for the module, i.e., immediate costs associated with degradation. For example, maintenance schedules for the electrolyzer plant may be in place, having been determined based on expected degradation rates of the modules. Modules degrading faster or slower than this expected degradation rate may increase maintenance cost. It may also lead to modules being exchanged before or after they reach a degradation state at which they should be exchanged. Moreover, hydrogen production efficiency (and, accordingly, production costs) may depend on the degradation state of an electrolyzer module.

Determining degradation parameters based on stack attributes such as stack type and/or stack supplier may comprise taking into account nominal values for one or more of the above parameters associated with the stack(s) of a given module.

Determining costs associated with a degree of maintenance schedule compliance may comprise determining costs that arise when modules are fully degraded prior to a scheduled maintenance time or are not fully degraded at the scheduled maintenance time, e.g., being short of a module for some time, additional maintenance action, or taking a module out of operation sooner than necessary.

Carrying out determining the target module setpoints with maintenance schedule compliance as constraints may comprise, as an example, setting constraints such that certain modules will reach a maintenance state at a predetermined time based on expected degradation.

According to the present disclosure, the module degradation cost may be predicted using a model configured to quantitatively determine the degradation of the at least one electrolyzer stack depending on module setpoint history. As an example, the model may take into account one or more of the above-mentioned parameters associated with module degradation cost.

The method of the present disclosure may comprise monitoring actual module setpoints and corresponding actual degradation and, based thereon, constantly adjusting model parameters of the model to reflect the actual degradation under operation at given module setpoints, optionally by means of machine learning, ML, or artificial intelligence, AI.

Thus, a corrective element is provided that allows for improved prediction accuracy of the degradation costs, and, accordingly, better results in terms of cost reduction.

According to the present disclosure, determining the target module setpoints may be carried out such that the target module setpoint is the same for all electrolyzer modules. For example, this may be achieved by a corresponding boundary condition. This can have computational benefits, automation necessity, e.g. if modules cannot be controlled individually, or the whish to evenly wear the stacks. The overall plant power setpoint may result from a sum of the module setpoints of all (active) electrolyzer modules of the plant. Thus, the overall plant power setpoint may be distributed evenly over the plurality of electrolyzer modules.

Determining the target module setpoints may comprise taking into account constraints concerning the plant setpoint. For example, a plant setpoint, although governed by some constraints (e.g., sufficient output of the plant from operation and storage and/or limits to the amount of consumed electricity for operation), may be varied within said constraints. For example, flexibility may be provided by hydrogen or electricity storage, as mentioned above.

The operation of the plant may, for example, be characterized at least by input power and a hydrogen output and/or an efficiency of hydrogen production of the overall plant. Additional parameters characterizing the operation are conceivable.

Moreover, further aspects may also be taken into account in the optimization, e.g., available storage for energy, hydrogen, oxygen, and heat, and their respective cost/efficiency.

Further aspects that may also be taken into account in the optimization are characteristics of the electrolyzer modules, operating conditions, or wear of equipment, among others.

Optionally, in addition to the above-described technical aspects, there may also be aspects that concern pricing, contractual obligations, or the like, that can be taken into account in the optimization.

The invention also provides a system comprising a processing system configured to carry out any of the methods of the present disclosure.

The system may further comprise one or more electrolyzer modules of an electrolyzer plant, the processing system configured to control operation of the one or more electrolyzer modules to operate at the determined target module setpoints. The system may be or comprise the electrolyzer plant.

The system may comprise a hydrogen storage system and/or a power storage system.

The invention also provides a computer program product comprising instructions which, when the program is executed by a computer, cause the computer to carry out any of the methods of the present disclosure.

The invention also provides a computer-readable medium comprising instructions which, when executed by a computer, cause the computer to carry out any of the methods of the present disclosure.

The features and advantages outlined above in the context of the method similarly apply to the system, the computer program product, and the computer-readable medium described herein.

Further features, examples, and advantages will become apparent from the detailed description making reference to the accompanying drawings.

BRIEF DESCRIPTION OF THE DRAWINGS

In the accompanying drawings,

Figures 1a, 1b    illustrate schematic representations of an electrolyzer plant;

Figure 2          is a flowchart illustrating a method according to the present disclosure;

Figure 3          is a flowchart illustrating a method according to the present disclosure;

Figure 4          is a flowchart illustrating a method according to the present disclosure.

DETAILED DESCRIPTION

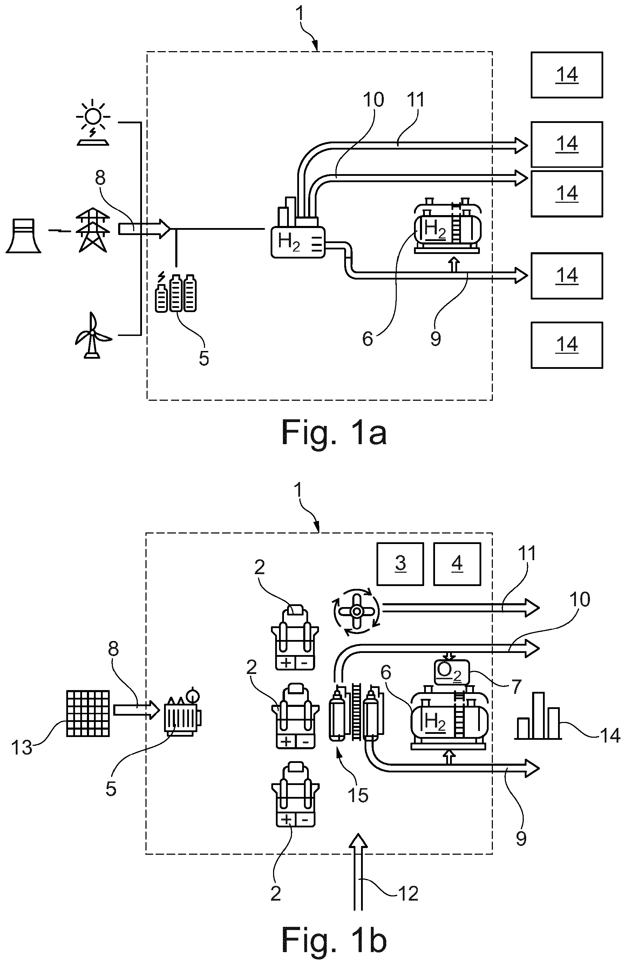

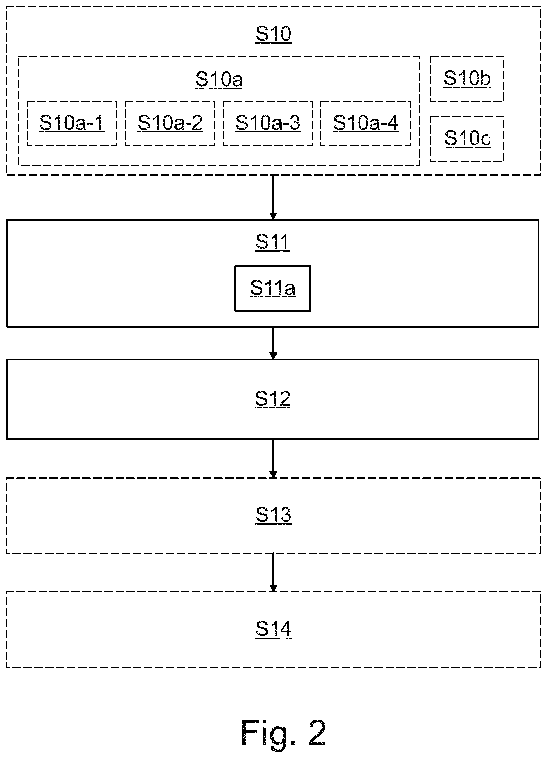

The system 1 of the present disclosure comprises a processing system 3 (also referred to as computing system) configured to carry out a method according to the present disclosure, for example a method as outlined in the context of one of Figures 2 to 4. Optionally, the system may also be or comprise an electrolyzer plant comprising a plurality of electrolyzer modules 2. Such a system is illustrated in Figures 1a and 1b.

The system in Figures 1a and 1b is shown as comprising optional monitoring devices 4, optional electricity storage 5, optional hydrogen storage 6 and optional oxygen storage 7. Furthermore, arrow 8 indicates electricity input to the electrolyzer plant, arrow 9 indicates hydrogen output out of the electrolyzer plant, arrow 10 indicates oxygen output out of the electrolyzer plant, arrow 11 indicates heat output out of the plant (or heat input into the plant), and arrow 12 indicates water input into the electrolyzer plant.

Merely for illustration and not part of the system of the present example, an electrical grid 13 and networks 14 into which the hydrogen, oxygen, and heat are fed, are shown.

Moreover, an optional hydrogen and oxygen separator tank 15 is shown.

It is noted that Figure 1a illustrates the plant with fewer details of the individual components of the plant than in Figure 1b merely for illustrating in an exemplary manner that different levels of details may be considered when looking at plant operation.

The method of the present disclosure may be performed in a system as shown in Figures 1a and 1b, the method steps, for example, being carried out by the processing system 3, or any other suitable system, particular a system according to the present disclosure.

Figure 2 is a flowchart illustrating a method according to the present disclosure.

The present disclosure provides computer-implemented method for controlling operation of an electrolyzer plant comprising one or more electrolyzer modules, each comprising at least one electrolyzer stack, particularly, a plant comprising a plurality of electrolyzer modules.

The method comprises determining, in step S11, for each of the one or more electrolyzer modules, a target module setpoint by minimizing, in step S11a, a total operational cost function associated with the operation of the electrolyzer plant, wherein the total operational cost function comprises overall degradation cost associated with the degradation of the one or more electrolyzer modules. Boundary conditions may be set for determining the target module setpoint.

The method also comprises controlling, in step S12, each of the one or more electrolyzer modules to operate at the determined target module setpoint.

The method may also comprise the step S10 of determining the total operational cost function prior to step S11.

The step of determining the total operational cost function may comprise determining, in step S10a, for each of the one or more electrolyzer modules, a module degradation cost resulting from operation of the electrolyzer module as a function of module setpoint, and, based thereon, determining the overall degradation cost.

The method, particularly determining the total cost function, may comprise one or more of steps S10a-1 to S10a-4.

In optional step S10a-1, the cycle cost is determined based on the number of on/off cycles and the cycle cost for a single cycle, particularly determining the cycle cost by multiplying the number of on/off cycles and the cost of stack maintenance at end-of-life $M^{maintenance}$ divided by the nominal number $n^{lifecycle}$ of on/off cycles before maintenance.

In optional step S10a-2, the ramping cost for operation at a non-constant module setpoint is determined based on cumulative ramping and based on degradation behavior of the electrolyzer module, particularly separator and/or catalyst of the electrolyzer module, depending on the non-constant module setpoint.

The ramping cost, particularly the degradation behavior, may be determined based on the ramping factor $r$ which relates ramping from minimum to maximum module setpoint to one on/off cycle, a ratio of the cumulative ramping and the maximum module setpoint, and cycle cost for a single cycle, particularly the cost of stack maintenance at end-of-life $M^{maintenance}$ divided by the nominal number $n^{lifecycle}$ of on/off cycles before maintenance.

In optional step S10a-3, the degradation cost due to current based on a cumulative current density in the cell membrane is determined, in particular simulated by a model or derived from the module setpoint, or based on an integrated module setpoint, in particular, wherein the degradation cost due to current is determined based on the integrated module setpoint, cost for stack maintenance at end-of-life $M^{maintenance}$, the nominal stack lifetime, and maximum module setpoint.

In optional step S10a-4, degradation parameters are determined based on stack attributes such as stack type and/or stack supplier.

A detailed example for determining the degradation cost will be provided below.

Determining the total operational cost function may comprise the optional step S10b of determining degradation costs associated with use of batteries and/or hydrogen storages as energy storage as part of the operation of the electrolyzer plant.

Determining the total operational cost function may comprise the optional step S10c of determining costs associated with a degree of maintenance schedule compliance, for example in the form of an optimization constraint of the like.

The method may comprise the step S13 of monitoring actual module setpoints and corresponding actual degradation and, based thereon, constantly adjusting, in step S14, modelling parameters of a degradation model to reflect the actual degradation under operation at given module setpoints, optionally by means of machine learning, ML, or artificial intelligence, AI.

**Examples for methods according to the present disclosure**

The method of the present disclosure describes how to include module degradation/stack degradation into a control/optimization model of a hydrogen production plant via electrolysis. By including degradation in the operational model, the setpoints can be chosen, for example, to minimize the sum of energy cost and stack degradation cost. This leads to setpoint selection resulting in optimized stack lifetime and thus minimized total operational cost.

Electrolyzers, like all electro-chemical machinery (e.g. battery, fuel-cell) degrade with operation over time. This means they lose performance, resulting in efficiency decrease and thus higher power consumption for the same hydrogen production, potentially a higher crossover (H2 to O2 and vice versa) resulting in an increased safety risk, shorter maintenance intervals, leading to more frequent and thus higher stack replacement cost.

At present, electrolysis setpoints are often kept quite constant and close to 100% capacity. For this type of operation, the effect of degradation can be quite well predicted and modelled as a more-or-less linear degradation over time. Consequently, the manufacturers of electrolyzer stacks give a certain amount of "full load operating hours" before a stack must be replaced. This number is typically in the range of 40.000-80.000 hours.

Changes from constant energy supply to a volatile one, for example depending on renewable power availability (sun, wind) have changed the picture. That is, optimizing the operational setpoint depending on market situation (e.g., power spot market) or volatile demand (e.g., trailer loading) may reduce operational cost. However, it may also increase degradation.

Under volatile operations, the lifetime of the stacks may drop dramatically (e.g. by a factor of 2 to 10). Measures for increasing lifetime under volatile conditions are investigated, which are based on changes in production, layout, and materials of the stacks. However, no solutions are currently available for mitigating the effect of volatile operation for existing electrolyzers. The present disclosure proposes mitigating the effect by determining an operational strategy for the electrolyzers, such that benefits can be achieved for existing and future electrolyzers. It is noted that, while beneficial effects of the method of the present disclosure are particularly pronounced for volatile operation scenarios, said beneficial effects are also achieved in non-volatile operation scenarios.

As briefly mentioned above, setpoint optimization is possible, as there are generally flexibilities that give an optimizer alternative choices. Such flexibilities may stem from flexibility in using energy from the grid, flexibility in the amount of output hydrogen, hydrogen storage that acts as a buffer between production and demand and can thus decouple the production setpoints from fixed demand requirements, power storage (e.g., using battery energy storage system, BESS) that acts as a buffer between power supply and the hydrogen production and thus decouples the production setpoints from fixed power availability (e.g. from renewable resources or "power purchase agreements"), and/or availability of multiple electrolyzer modules that allow for distributing the overall plant setpoint, e.g. evenly or differently, to the modules.

The method of the present disclosure allows taking into account degradation effects when determining operational setpoints, specifically module setpoints. A total operational cost function may be used that includes degradation cost. A model may be employed for determining degradation cost, wherein:

- The model allows to predict the effect under variation of exactly one parameter (i.e., module setpoint).

- The model allows to predict quantitively the degradation status of the stack, depending on the operational setpoint history.

- The model can be used in optimization to control, e.g., reduce, degradation.

- The model depends only on few parameters that can be obtained for each project.

- The model may provide optimal control of operation of the plant and does not necessarily need to allow for chemical reactions forecasting or degradation status prediction.

As will be understood from the above description, the method of the present disclosure allows to holistically optimize the module setpoints taking into account module degradation (among other factors).

Below an example for determining a total operational cost function including degradation cost is provided in detail.

As an example, as explained above, the following parameters may affect degradation cost (in order of expected severity):

- **On/Off Cycles** (also referred to as open current voltage, OCV, or switching off): Switching an electrolyzer module off and bringing it back to operations dissolves and passivates the electrodes. Only a limited number of such switching cycles can be performed during operations with safety guarantees provided by the module manufacturer and the module has to be maintained or replaced after $n^{\text{lifecycles}}$ such switches. This is why it may in same cases be better to keep electrolyzers in "hot standby" where the voltage is below the Nernst Voltage leading to small currents that are flowing, but without any production of hydrogen. However, including it in the model gives the option to still switch off if beneficial and preventing it otherwise.

- Set-point ramping (also referred to as *volatility*): Frequent changes of the setpoints leads to increased degradation. This can very generally be implemented in the control algorithm but making it part of the optimization model ensures that it is only prevented, when advantageous.

- Stack temperature: It is known that higher temperatures lead to a quicker chemical reaction. This is true as well for degradation phenomena. On the other hand, higher temperatures lead to increased stack efficiency. Thus, a good balance must be found, which is possible by a model that includes both effects, e.g. as described herein.

- High currents (nearly proportional to high power): Stacks running at a higher power may degrade faster. This is why the stack manufacturer may provide their lifetime in terms of "full load hours", which integrates over time and power.

Taking into account the above considerations, a degradation model to be used for minimizing the total operational cost function can be configured as follows.

**On/Off cycles**

Cycle cost may be defined as follows ($M^{\text{maintenance}}$ = cost of stack maintenance at end-of-life)

$$\pi^{\text{cycle degradation, nom}} := \frac{M^{\text{maintenance}}}{n^{\text{lifecycles}}} \text{number of cycles}$$

$$= \frac{M^{\text{maintenance}}}{n^{\text{lifecycles}}} \#\{t \in [0, t_f] \mid \omega(t-) = 1 \text{ and } \omega(t+) = 0\}.$$

Here the number of cycles is counted as the number of times the electrolyzer is switched off and the following abbreviations are used:

$$\omega(t-) = \lim_{\tau \to t, \tau < t} \omega(\tau) = \begin{cases} 1, & \text{module running shortly before } t, \\ 0, & \text{module off shortly before } t, \end{cases},$$

$$\omega(t+) = \lim_{\tau \to t, \tau > t} \omega(\tau) = \begin{cases} 1, & \text{module running shortly after } t, \\ 0, & \text{module off shortly after } t, \end{cases}.$$

**Set-point ramping**

Operation at non-constant set-points also leads to degradation behavior of separator and catalyst and can be quantified using

$$\int_0^{t_f} |\partial_t P^{\text{DC}}(t)| \, dt.$$

To relate this quantity to a penalty, the ramp degradation is compared to cycle degradation, where we assume that operating a ramp from minimal to maximal power setpoint has the same degrading effect as r off/on cycles, where r is a ratio between 0 (0%) and 1 (100%). Then

$$\pi^{\text{ramp degradation, nom}} := \frac{r M^{\text{maintenance}}}{n^{\text{lifecycles}} P_{\max}^{\text{DC}}} \int_0^{t_f} \left| \partial_t P^{\text{DC}}(t) \right| \mathrm{d}t.$$

## High currents

Operation at higher currents leads to higher degradation due to anode passivation, growth of inhibiting structures and thinning of separator. To measure the operation at high currents weighted with the time an electrolyzer module is operated at such high currents, the quantity

$$\int_0^{t_f} j(t) \, \mathrm{d}t$$

can be used. Here j denotes the current density in the cell membrane. The current density j is typically only available within high detail physical simulations, but is monotonically correlated with the power of an electrolyzer module. As a surrogate that is available also in simple models such as the presented linear model, the integrated power may be used:

$$\int_0^t P^{\text{DC}}(t) \, \mathrm{d}t.$$

A degradation cost may be attributed to this quantity in the following way: If a module is operated for the time $T^{\text{lifespan}}$ at the maximal power set-point is has to undergo maintenance with maintenance cost $M^{\text{maintenance}}$. Thus

$$\pi^{\text{power degradation, nom}} := \frac{M^{\text{maintenance}}}{P_{\max}^{\text{DC}} T^{\text{lifespan}}} \int_0^{t_f} P^{\text{DC}}(t) \, \mathrm{d}t.$$

## Temperature

The aforementioned effects are generally temperature dependent. They increase with higher module temperature and decrease with lower temperature. The above relations are valid for electrolyzer module operation at nominal temperature $T^{\text{nom}}$. For temperatures different from nominal operation temperature, they are rescaled, for example with a factor described by Arrhenius law

$$\exp\left( \frac{E}{R} \left( \frac{1}{T} - \frac{1}{T^{\text{nom}}} \right) \right).$$

Here R denotes the universal gas constant and $E$ is the activation energy of the degradation reaction.

## Total model

Combining the mentioned degradation effects into a single degradation penalty yields

$$\pi^{\text{degradation}} = \exp\left( \frac{E}{R} \left( \frac{1}{T} - \frac{1}{T^{\text{nom}}} \right) \right) \left[ \pi^{\text{power degradation, nom}} + \pi^{\text{cycle degradation, nom}} + \pi^{\text{ramp degradation, nom}} \right].$$

This equation captures all four mentioned effects and only relies on the following parameters:

| | Description | Origin | Value example |
|---|---|---|---|
| E | Activation energy of the degradation reaction | e.g. from measurements | E/R = 0.07226 K |

(continued)

|  | Description | Origin | Value example |
|---|---|---|---|
| $T^{nom}$ | Temperature of stack during nominal operation | e.g. provided by stack supplier | 80°C |
| $T^{lifespan}$ | Stack lifetime under nominal operation | e.g. provided by stack supplier | 50.000 full-load-hours |
| $P^{DC}_{max}$ | Maximum DC power setpoint | e.g. provided by stack supplier | 1 MW |
| $M^{maintenance}$ | Cost for stack maintenance | e.g. provided by stack supplier | 50% of new stack |
| $n^{lifecycle}$ | Number of on/off cycles before maintenance | e.g. provided by stack supplier | 500 |
| $r$ | Factor that relates one "ramping from min to max" to one "on/off cycle" | e.g. from measurements | 10% |

**Determine setpoint based on minimization of total operational costs**

The combined degradation penalty is used to compute the module setpoints. In general, using optimization to obtain module setpoints may yield an optimization problem of the form

$$\min_{x,y} E(x,y) \text{ s. t. } c(x,y) \geq 0, y \text{ binary}$$

where $x, y$ denote decision variables and $x$ comprises at least the module points of the individual modules on a time-grid, i.e.

$$x = \left( P_1^1, P_2^1, \dots, P_{n^{\text{step}}}^1, P_1^2, \dots, P_{n^{\text{step}}}^2, \dots, P_1^{n^{\text{modules}}}, \dots, P_{n^{\text{step}}}^{n^{\text{modules}}}, \text{further decision variables}, \dots \right).$$

Here $P_j^i$ denotes the DC power set-point of the $i$-th electrolyzer module in the $j$-th timestep. Furthermore $c(x, y) \geq 0$ encodes the operational model of the hydrogen production plant and $E(x,y)$ the energy cost associated with the module setpoints encoded by $x$ over the time-horizon.

To include degradation into the model is to compute module setpoints by instead optimizing

$$\min_{x,y} E(x,y) + \pi^{\text{degradation}}(x,y) \text{ s. t. } c(x,y) \geq 0, y \text{ binary}$$

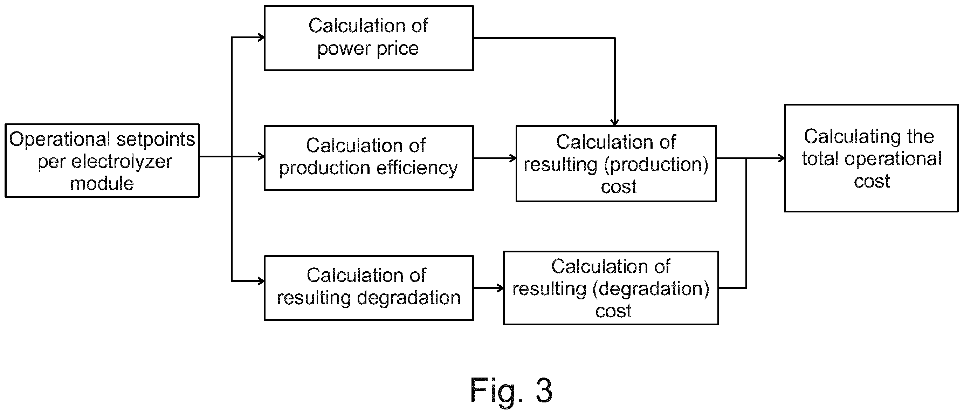

An exemplary flowchart for a method according to the present disclosure, which may employ the above principles, is shown in Figure 3.

It is noted that it is not necessary to include all of the above factors when determining the cost function. An improvement is already achieved when taking into account at least one of them. In some practical cases some factors may not have a significant impact. In any case, an accuracy of the method may be further improved by taking into account more than one of the factors.

**Further aspects of the present disclosure**

According to the present disclosure, the cost function may take into account degradation parameters that depend on stack attributes, among others the type of the stack (PEM, alkaline, SOEC, ...) and/or the supplier.

According to the present disclosure, the method may entail, in the determination of the module setpoints, optimized usage of storage assets for power and/or hydrogen.

The method may entail, in the determination of the module setpoints, taking into account battery degradation for electrical energy storage so as to prevent excessive battery degradation.

The method may entail, as secondary goals or boundary conditions for the minimization, controlling degradation of the electrolyzer modules, for example to minimize degradation or so as to meet maintenance schedules, e.g., to improve spare part management and maintenance schedule compliance. The latter may entail controlling operation so as to achieve:

- Quicker degradation to ensure that the stack is at end-of-life when the planned replacement date is scheduled
- Slower degradation to ensure that the stack will still be operational and safe until the planned replacement date

According to the method of the present disclosure, actual module setpoints may be stored, the real degradation may be monitored, and the model parameters of the above-described model(s) may be constantly adjusted/updating to reflect the actual degradation under given setpoints. This can be done with AI or ML. This may enhance accuracy because the degradation parameters usually vary between individual electrolyzer stacks and because the real degradation usually follows a non-linear behavior of degradation over time. The proposed method may take care that always a local linear fit to the degradation curve at the current time is taken.

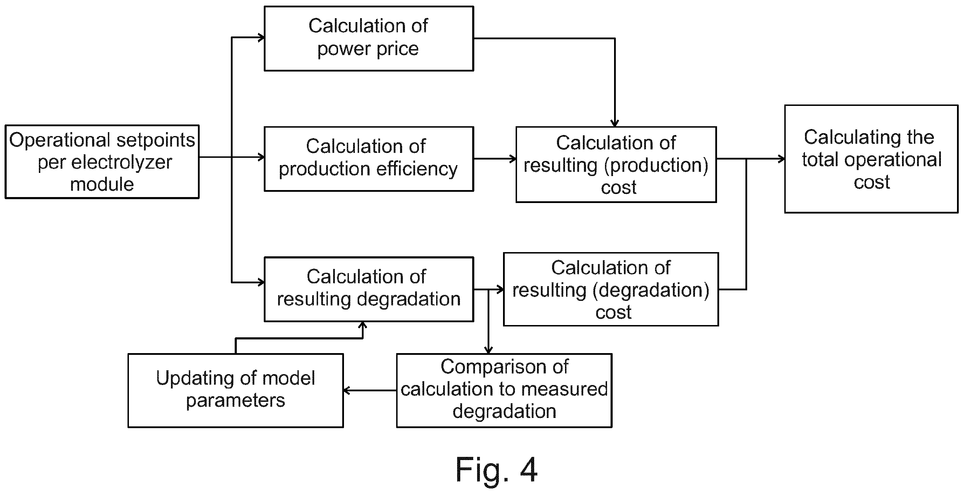

Figure 4 illustrates an exemplary workflow including such an adjusting or updating of model parameters.

The method of the present disclosure has been shown to decrease total operational cost. The total operational cost has been shown to be decreased by about 2% for some relatively constant operation scenarios and about 35% for some rather volatile operation scenarios, as compared to degradation-unaware control.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

**Claims**

1. A computer-implemented method for controlling operation of an electrolyzer plant (1) comprising one or more electrolyzer modules (2), each comprising at least one electrolyzer stack, the method comprising:

   determining (S11), for each of the one or more electrolyzer modules (2), a target module setpoint by minimizing (S11a) a total operational cost function associated with the operation of the electrolyzer plant (1), wherein the total operational cost function comprises overall degradation cost associated with the degradation of the one or more electrolyzer modules; and
   controlling (S12) each of the one or more electrolyzer modules to operate at the determined target module setpoint.

2. The method of claim 1, comprising determining (S10) the total operational cost function, wherein determining the total operational cost function comprises determining (S10a), for each of the one or more electrolyzer modules (2), a module degradation cost resulting from operation of the electrolyzer module as a function of module setpoint and/or setpoint variations, and, based thereon, determining the overall degradation cost.

3. The method of claim 2, wherein the module degradation cost is calculated based on at least one of the following:

   cycle cost, in particular based on a number of on/off cycles for the electrolyzer module,
   ramping cost, in particular based on a cumulative amount of module setpoint ramping for the electrolyzer module,
   degradation cost due to current, in particular based on cumulative current or current density for the electrolyzer module,
   operating temperature, in particular, a scaling factor derived from the operating temperature, for example, described by Arrhenius law.

4. The method of claim 2 or claim 3, wherein the module degradation cost is based on at least one of the following parameters, one or more of which may be time dependent, associated with the at least one stack of the electrolyzer module:

   activation energy $E$ of degradation reaction,
   nominal temperature of the stack,

nominal stack lifetime
maximum stack current $I_{max}$,
cost for stack maintenance $M^{maintenance}$ at end-of-life,
nominal number $n^{lifecycle}$ of on/off cycles before stack maintenance,
ramping factor $r$, which relates ramping from minimum to maximum module setpoint to one on/off cycle.

5. The method of claim 3 or claim 4, comprising determining (S10a-1) the cycle cost based on the number of on/off cycles and the cycle cost for a single cycle, particularly determining the cycle cost by multiplying the number of on/off cycles and the cost of stack maintenance at end-of-life $M^{maintenance}$ divided by the nominal number $n^{lifecycle}$ of on/off cycles before maintenance.

6. The method of any of claims 3 to 5, the method comprising determining (S10a-2) the ramping cost for operation at a non-constant module setpoint based on cumulative ramping and based on degradation behavior of the electrolyzer module, particularly separator and/or catalyst of the electrolyzer module, depending on the non-constant module setpoint.

7. The method of claim 6, wherein the ramping cost, particularly the degradation behavior, is determined based on a/the ramping factor $r$ which relates ramping from minimum to maximum module setpoint to one on/off cycle, a ratio of the cumulative ramping and the maximum module setpoint, and cycle cost for a single cycle, particularly the cost of stack maintenance at end-of-life $M^{maintenance}$ divided by the nominal number $n^{lifecycle}$ of on/off cycles before maintenance.

8. The method of any of claims 3 to 7, comprising determining (S10a-3) the degradation cost due to current based on a cumulative current density in the cell membrane, in particular simulated by a model or derived from the module setpoint, or based on an integrated module setpoint, in particular,
wherein the degradation cost due to current is determined based on the integrated module setpoint, cost for stack maintenance at end-of-life $M^{maintenance}$, a/the nominal stack lifetime, and maximum module setpoint.

9. The method of any of the preceding claims,

comprising determining the total operational cost function, wherein determining the total operational cost function comprises at least one of: determining (S10a-4) degradation parameters based on stack attributes such as stack type and/or stack supplier, determining (S10b) degradation costs associated with use of batteries and/or hydrogen storages as energy storage as part of the operation of the electrolyzer plant (1), and determining (S10c) costs associated with a degree of maintenance schedule compliance, and/or
wherein determining the target module setpoints is carried out with maintenance schedule compliance as constraints.

10. The method of any of claims 2 to 9, wherein the module degradation cost is predicted using a model configured to quantitatively determine the degradation of the at least one electrolyzer stack depending on module setpoint history.

11. The method of claim 10, wherein actual module setpoints and corresponding actual degradation are monitored (S13) and, based thereon, model parameters of the model are constantly adjusted (S14) to reflect the actual degradation under operation at given module setpoints, optionally by means of machine learning, ML, or artificial intelligence, AI.

12. The method of any of the preceding claims, wherein determining the target module setpoints is carried out such that the target module setpoint is the same for all electrolyzer modules (2).

13. A system (1) comprising a processing system (3) configured to carry out the method of any one of claims 1 to 12, in particular further comprising one or more electrolyzer modules (2) of an electrolyzer plant, the processing system configured to control operation of the one or more electrolyzer modules (2) to operate at the determined target module setpoints, and optionally further comprising a hydrogen storage system and/or a power storage system.

14. A computer-readable medium comprising instructions which, when executed by a computer, cause the computer to carry out the method of any one of claims 1 to 12.

15. A computer program product comprising instructions which, when the program is executed by a computer, cause the computer to carry out the method of any one of claims 1 to 12.

Fig. 1a

Fig. 1b

Fig. 2

Fig. 3

Fig. 4

17

Europäisches
Patentamt

European
Patent Office

Office européen
des brevets

# EUROPEAN SEARCH REPORT

**Application Number**

EP 23 15 6359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 124 674 A1 (ABB SCHWEIZ AG [CH]) 1 February 2023 (2023-02-01) * claims 1-3, 6 * * paragraphs [0025], [0026], [0029] – [0033], [0038] – [0042], [0045], [0046], [0082], [0085], [0094] – [0097] * * figures 1, 2, 4 * | 1-15 | INV. G06Q10/04 C25B1/04 |
| A | EP 4 047 112 A2 (HITACHI LTD [JP]) 24 August 2022 (2022-08-24) * paragraphs [0003] – [0008], [0018], [0024] – [0028], [0046] – [0048], [0055], [0056] * * figures 1-3, 10 * | 1-15 | |
| A | US 2020/226482 A1 (NAGINO GOSHU [JP]) 16 July 2020 (2020-07-16) * paragraphs [0046], [0063] – [0064], [0075] – [0079], [0090] – [0094] * * figures 1-4, 7 * | 1-15 | |

**TECHNICAL FIELDS SEARCHED (IPC)**

G06Q
C25B

The present search report has been drawn up for all claims

| Place of search | Date of completion of the search | Examiner |
|---|---|---|
| Munich | 21 July 2023 | Abdel Jaber, Wael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 6359

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2023

| Patent document cited in search report | | Publication date | Patent family member(s) | | Publication date |
|---|---|---|---|---|---|
| EP 4124674 | A1 | 01-02-2023 | EP | 4124674 A1 | 01-02-2023 |
| | | | WO | 2023006460 A1 | 02-02-2023 |
| EP 4047112 | A2 | 24-08-2022 | EP | 4047112 A2 | 24-08-2022 |
| | | | JP | 2022125850 A | 29-08-2022 |
| US 2020226482 | A1 | 16-07-2020 | CN | 111095341 A | 01-05-2020 |
| | | | DE | 202018006783 U1 | 20-12-2022 |
| | | | EP | 3690792 A1 | 05-08-2020 |
| | | | JP | 7061616 B2 | 28-04-2022 |
| | | | JP | WO2019059321 A1 | 15-10-2020 |
| | | | US | 2020226482 A1 | 16-07-2020 |
| | | | WO | 2019059321 A1 | 28-03-2019 |

EPO FORM P0459

For more details about this annex : see Official Journal of the European Patent Office, No. 12/82